# EUROPÄISCHE PATENTANMELDUNG

(11) **EP 4 425 280 A1**
(43) Veröffentlichungstag der Anmeldung: **04.09.2024**
(21) Anmeldenummer: 23159065.4
(22) Anmeldetag: 28.02.2023
(51) Int. Cl.: G05B 13/02

(54) **VERFAHREN ZUR OPTIMIERUNG EINER BEWEGUNGSSTEUERUNG UNTER VERWENDUNG VON VERSTÄRKENDEM LERNEN, ENTSPRECHENDES COMPUTERPROGRAMMPRODUKT UND ENTSPRECHENDE VORRICHTUNG**

(71) Anmelder: Siemens Aktiengesellschaft, 80333 München (DE)
(72) Erfinder: Pol, Sebastian, 90556 Seukendorf (DE); Turner, Danielle, 90449 Nürnberg (DE); Geipel, Markus Michael, 80799 München (DE); Thon, Ingo, 85630 Grasbrunn (DE)
(74) Vertreter: Siemens Patent Attorneys

(57) **Zusammenfassung**

Um eine optimale Strategie für die Zuweisung eines Aufnahmegerätes zu einem Objekt auf einer Transportvorrichtung zu finden, wird ein im Wesentlichen auf Reinforcement Learning (RL) basierendes System vorgeschlagen.

Während es im Allgemeinen bekannt ist, den Agenten gegen den digitalen Zwilling des Systems zu trainieren, besteht der Ansatz in dem vorliegenden Verfahren weiterhin darin, den Agenten in einer Surrogatsimulation, also in einer künstlich generierten Umgebung, zu trainieren, da der Trainingsprozess so erheblich beschleunigt werden kann.

## Beschreibung

In Automatisierungsanlagen gibt es vielfältige Aufgaben, welche die Aufnahme und Bewegung von Objekten beinhalten. Fertigungsanlagen, darunter beispielsweise Verpackungsanlagen, in unterschiedlichsten Branchen der Industrieautomatisierung verwenden beispielsweise Förderbänder, auf denen sich Objekte, Produkte oder Teile von Produkten, in der Regel unsortiert oder unregelmäßig befinden. Beispiele finden sich in der Primär- und Sekundärverpackungsbranche, wie in der Nahrungs- und Genussmittelindustrie. Die Anzahl und die Anordnung der Produkte pro Förderfläche kann dabei stark variieren. Für einen Verpackungsvorgang werden oftmals mehrere Industrieroboter, so genannte Delta-Picker oder Knickarmroboter, in Reihe verwendet, um ein "Pick and Place", also das Aufnehmen des Produkts vom Förderband und Neupositionieren durchzuführen.

Unter einer Handhabungsmaschine, im Folgenden auch als Gerät bezeichnet, versteht man beispielsweise eine sogenannte Deltakinematik oder einen Roboter, der in der Automatisierung eingesetzt wird; das beschriebene Vorgehen ist aber nicht auf diese Beispiele beschränkt. Zu den Anwendungen gehören neben den Pick-and-Place-Operationen das Verpacken (beispielsweise das Palettieren) von Produkten und vieles mehr.

Beim Betrieb einer Reihe von, mehr oder weniger gleichartigen, Geräten (z. B. den oben aufgeführten Robotern oder Delta-Kinematiken), die die - mehr oder weniger - gleiche Aufgabe ausführen können, ergibt sich die Herausforderung, zu entscheiden welche Maschine zu einem bestimmten Zeitpunkt jeweils die Aufgabe ausführt. Wenn man sich zum Beispiel eine Reihe von Pick-and-Place-Maschinen vorstellt, die eine Schachtel oder Kiste mit Produkten füllen, welche auf einem Förderband antransportiert werden, so muss entschieden werden, welches Objekt von welcher Maschine kommissioniert, also von einem Förderband oder einer anderen Transportvorrichtung aufgenommen, ggf. bearbeitet und an einem anderen Platz abgelegt wird. In vielen Konfigurationen kann dabei jedes Produkt von jeder Aufnahmevorrichtung kommissioniert werden, was zu einem sehr hohen Maß an Flexibilität für die Lösung der Aufgaben führt. Ein Gerät ist jedoch möglicherweise nicht in der Lage, rechtzeitig alle Objekte auszuwählen, die sich beispielsweise sehr nahe beieinander befinden, so dass nach Durchlauf Objekte nicht komissioniert und beispielsweise auf dem Förderband liegen geblieben sind. Mehrere Kommissionierer werden daher üblicherweise die Kommissionierung übernehmen und diese Aufgabe verteilt lösen.

Darüber hinaus werden in der Regel unterschiedliche sogenannte Kommissionierlinien für unterschiedliche Aufgaben eingerichtet, die unterschiedliche Optimierungskriterien erfordern. Es kann in einem Anwendungsfall wichtig sein, dass alle Objekte erfolgreich ausgewählt und aufgenommen werden (z. B. beim Herausfiltern von bestimmten Materialien wie Wertstoffen oder auch Verunreinigungen aus einem Müllstrom). In anderen Anwendungsfällen ist die Aufgabe zu lösen, eine Verpackungseinheit vollständig zu befüllen (z. B. eine Schachtel Pralinen mit der richtigen Art und Anzahl von vorher festgelegten Schokoladenstücken), während es dabei weniger problematisch ist, wenn einige Einheiten auf dem Förderband am Ende nicht kommissioniert, also aufgenommen und abgelegt, werden. Ein weiteres Szenario wäre, Joghurtbecher in Paletten zu platzieren, so dass die Geschmacksrichtungen innerhalb einer Palette gleichmäßig verteilt werden.

Zusätzlich zu diesen Optimierungszielen gibt es ein weiteres Problem, dass bei aktuellen Einsatzstrategien der dadurch verursachte Verschleiß der Maschinen nicht berücksichtigt wird. Wenn die Arbeitsbelastung ungleichmäßig ist, also beispielsweise das erste Gerät an der Strecke immer zuerst berücksichtigt wird, so verschleißen die Geräte mit unterschiedlichen Geschwindigkeiten, was zu verschiedenen Wartungsintervallen, höheren Ausfallzeiten und dadurch letztendlich zu häufigerem Stillstand in der Anlage und zu erhöhten Betriebskosten führt. Darüber hinaus lässt sich auch der Verschleiß individueller Delta-Picker minimieren, indem Geschwindigkeit, Beschleunigung, und Ruck intelligent gesteuert werden. Ebenso kann eine Optimierung der Fahrwege (z. B. keine scharfen Kurven) den Verschleiß eines Delta-Pickers reduzieren.

Aus der Druckschrift EP 3456485A1 ist bereits ein Verfahren zum Optimieren eines automatisierten Vorgangs zum Auswählen und Greifen eines Objekts durch einen Roboter bekannt. Es wird ein Optimierungskriterium festgelegt und bei der Ermittlung eines Prioritätskenners berücksichtigt. Dabei geht die Kapazität der verschiedenen Roboter der Anordnung mit in die Berechnung ein. Der Prioritätskenner regelt die Priorität derjenigen Objekte, welche gemeinsam einem Roboter zugeordnet werden.

Während bekannte Zuweisungsstrategien die Hauptaufgabe in den meisten Szenarien erfüllen können, berücksichtigen sie nicht die oben erwähnten Herausforderungen. Das liegt daran, dass die bekannten Zuweisungsstrategien eine Koordination zwischen mehreren Maschinen, welche die gleiche Aufgabe erfüllen sollen oder können, bislang nicht berücksichtigen. Stattdessen ist jede Maschine (Kommissionierer) mit einer individuellen Richtlinie ausgestattet, die entscheidet, welche Objekte in seiner Arbeitszone ausgewählt und gegriffen werden sollen.

Gesucht ist also beispielsweise
- eine Zuordnung der Objekte zu den Zielpositionen, sowie
- eine Abfolge von Transport-, Leerlauf- sowie Pick-and-Place-Operationen der Kommissionierer.

In der Praxis treten hier unterschiedliche Konfigurationen auf:
- Die Geräte können sich ständig oder abrupt bewegen.
- Die Kommissioniervorgänge können von beweglichen oder temporären Stoppbändern aus durchgeführt werden.
- Die Anordnung der Transportvorrichtungen können parallel (in die gleiche Richtung oder entgegengesetzt laufend) oder orthogonal zueinander sein.
- Die Geräte können eine oder auch mehrere Komponenten gleichzeitig aufnehmen.
- Die Zielpositionen können eines oder mehrere Objekte aufnehmen.

Auch hinsichtlich der logistischen Randbedingungen können unterschiedliche Anforderungen bestehen:
- Es kann Einschränkungen geben, welches Objekt in welcher Zielposition platziert wird, oder es kann Bedingungen für Klassen auf Objekten und Klassen von Zielpositionen geben, z. B. ein grünes Objekt in jedem Feld.

Bekannte Strategien für die Bestimmung der nächsten Aktion, und damit im oben zitierten Beispiel die Auswahl des nächsten Gerätes zur Entnahme eines Objekts vom Förderband sind beispielsweise :
- Auswahl des Objekts, welches sich räumlich dem Maschinenarm am nächsten befindet,
- Auswahl des Objekts, das am weitesten vorne oder am weitesten hinten auf dem Förderband liegt.

Diese individuellen Zuweisungs-Strategien führen jedoch häufig zu dem Problem, dass die die Arbeitsbelastung individuell und damit ungleichmäßig auf die Maschinen in einer ArbeitsLinie verteilt werden und damit beispielsweise die Maschinen am Beginn eines Förderbands eine viel höhere Arbeitsbelastung haben als die Maschinen am Ende des Förderbands.

Keine der oben beschriebenen Methoden erlaubt es dem Benutzer jedoch, verschiedene Optimierungskriterien gegeneinander abzuwägen, um so zu einem verbesserten Steuerungs- und Auswahlverfahren zu gelangen.

Es ist daher eine Aufgabe der Erfindung, ein verbessertes Verfahren anzugeben, welches die oben genannten Nachteile überwindet. Es ist weiterhin eine Aufgabe der Erfindung, eine Vorrichtung anzugeben.

Diese Aufgabe wird gelöst durch ein Verfahren aufweisend die Merkmale des unabhängigen Patentanspruch 1 und ein Computerprogrammprodukt mit den Merkmalen des Patentanspruchs 10. Weiterhin wird die Aufgabe gelöst durch eine Vorrichtung welche die Merkmale des unabhängigen Patentanspruchs 11 aufweist.

Weitere Ausführungsformen der Erfindung werden durch die Unteransprüche abgedeckt.

Das Verfahren zur Optimierung einer Bewegungssteuerung eines Gerätes unter Verwendung von verstärkendem Lernen weist eine Trainingsphase auf, welche unter Verwendung von generierten Trainingsdaten erfolgt, mit einem ersten Optimierungsziel und mindestens einem zweiten, vom ersten Optimierungsziel verschiedenen Optimierungsziel umfasst mit jeweils einer Reward Funktion, und wobei die Trainingsphase einem Trainingsanteil auf dem ersten Optimierungsziel und einen Trainingsanteil auf das zumindest zweite Optimierungsziel richtet, mittels einer gewichteten Summe der Reward Funktionen des jeweiligen Optimierungsziels.

Genauer gesagt kann für jedes gewünschte Optimierungsziel eine Reward-Funktion aufgestellt werden. Mehrere Optimierungsziele können dann einem RL Agenten während des Trainings über eine nach Priorität gewichtete Summe der einzelnen Rewards zugeführt werden.

Für das Training nur eines Optimierungsziels ist dann die Gewichtung für das oder die anderen Optimierungsziele 0. Weitere Ausgestaltungen sind in den Unteransprüchen festgehalten.

Die Erfindung wird im Folgenden beispielhaft durch die Figuren dargestellt, dabei zeigen
Figur 1 ein Architekturkonzept
Figur 2 einen zeitlichen Ablauf des Kontrollflusses, unterteilt in zwei Phasen und
Figur 3 eine beispielhafte Simulation einer Pick&Place Situation mit Aufnahmegeräten in Draufsicht.

Um eine optimale Strategie für die Zuweisung eines Aufnahmegerätes zu einem Objekt auf einer Transportvorrichtung zu finden, wird ein im Wesentlichen auf Reinforcement Learning (RL) basierendes System vorgeschlagen.

Reinforcement Learning RL, auch verstärkendes Lernen genannt, steht für eine Reihe von Methoden des sogenannten maschinellen Lernens, bei denen ein Agent selbstständig eine Strategie (policy) erlernt, um erhaltene Belohnungen (rewards) zu maximieren. Dabei wird dem Agenten nicht vorgezeigt, welche Aktion in welcher Situation die beste ist, sondern er erhält durch die Interaktion mit seiner Umwelt zu bestimmten Zeitpunkten eine Belohnung, welche anzeigt, wie gut er eine Aufgabe gelöst hat. Diese Belohnung kann auch negativ sein. Die mathematischen Grundlagen des verstärkenden Lernens bilden die folgenden Begriffe: Der Agent (agent), die Umwelt (environment), die Zustände (states), die Aktionen (actions) und die Belohnungen (rewards). Die Methoden des bestärkenden Lernens betrachten die Interaktion des lernenden Agenten mit seiner Umwelt. Die Umwelt besteht aus einer Menge von Zuständen und einer Menge von Aktionen, sowie einer Dynamik und einer Startverteilung. Die Interaktion des Agenten mit der Umwelt findet zu diskreten Zeitpunkten statt. Zu jedem Zeitpunkt befindet sich der Agent in einem Zustand, wählt eine Aktion aus und erhält dafür eine Belohnung, wie oben beschrieben.

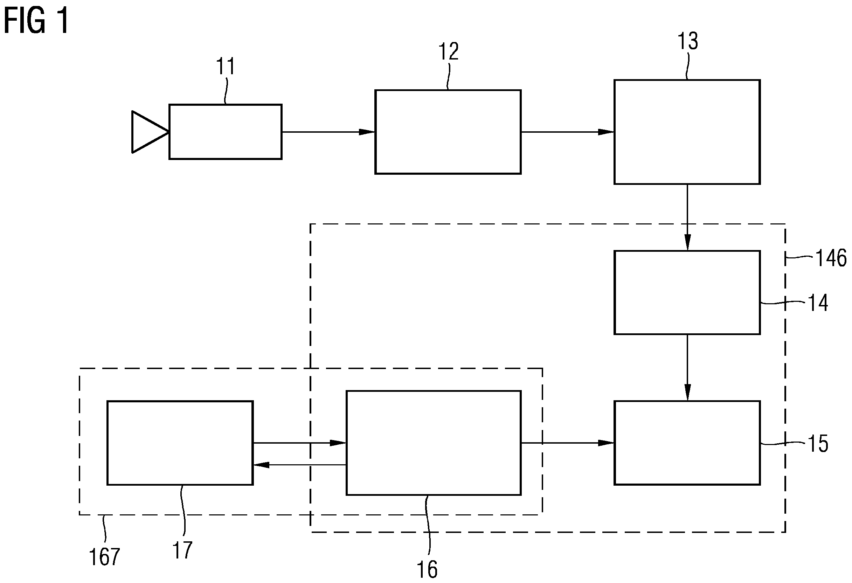

Die verwendeten Komponenten für das Verfahren sind (neben anderen) in Figur 1 dargestellt. Die außerhalb der gestrichelten Boxen 146, 167 liegenden Komponenten Kamera 11, Objekterkennung 12, und PLC 13 sind dabei für das ausführende System erforderliche Systemkomponenten, aber kein direkter Bestandteil der beschriebenen Erfindung. Die Komponenten, die sich innerhalb der gestrichelten Boxen 146, 167 befinden, werden im Folgenden näher beschrieben.

Die Box 167 beschreibt schematisch die wesentlichen Komponenten des Reinforcement Learning RL-Agent 16, welcher das Verfahren der Bewegungssteuerung in einer Trainingsphase auf Basis von Trainingsdaten 17 erlernt, um dann in einer Produktivphase auf die Steuerung 13 einzuwirken. Die Konstellation 146 wie in Figur 1 entspricht dabei einer Realisierung auf einem Edge Gerät, mittels Proxy Server 14 und Rest API 15. Andere Konstellationen sind jedoch ebenfalls denkbar.

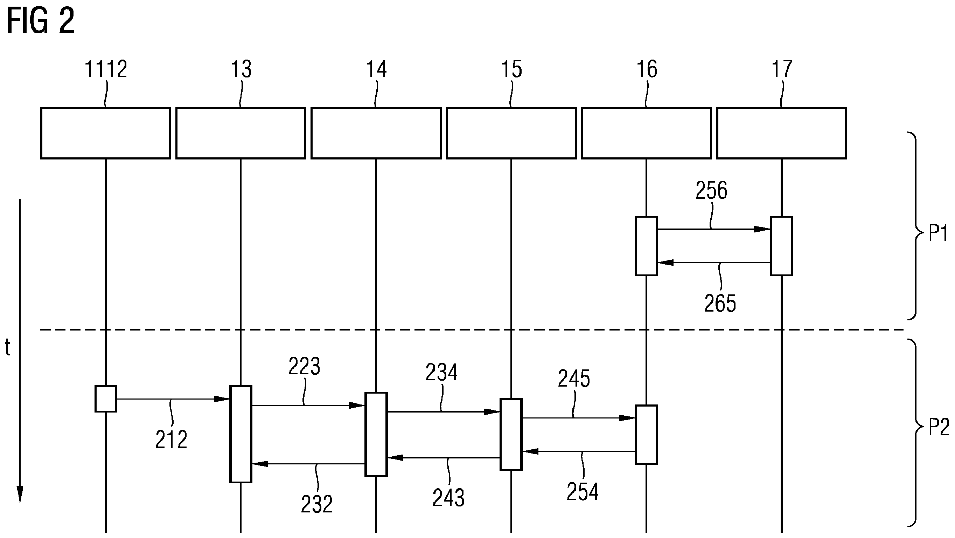

Figur 2 zeigt einen Kontroll-Fluss des vorgeschlagenen Verfahrens basierend auf der in Figur 1 vorgestellten Architektur. Die am Verfahren beteiligten Komponenten sind, soweit möglich, mit den gleichen Bezugszeichen versehen wie in Figur 1.

In der ersten Phase, der Trainingsphase P1 des Verfahrens wird der RL-Agent in einer sogenannten Surrogatsimulation trainiert. Die Surrogatsimulation zeichnet sich dadurch aus, dass sie signifikant schneller als Echtzeit ablauffähig ist und die zu simulierende Umgebung hinreichend akkurat abbildet. Dies geschieht beispielsweise durch eine gegenüber der Realität vereinfachte Darstellung der Steuerung des Gerätes in der Simulation. Während des Trainings interagiert der RL-Agent kontinuierlich mit der Umgebung, d. h. jede ausgeführte Aktion 256 wird anhand des zu erreichenden Ergebnisses bewertet, mit einer Belohnung (positiv oder negativ) 265, und führt zur Verstärkung des Verhaltens (bei positiver Bewertung) oder zur Änderung des Verhaltens (bei negativer Bewertung).

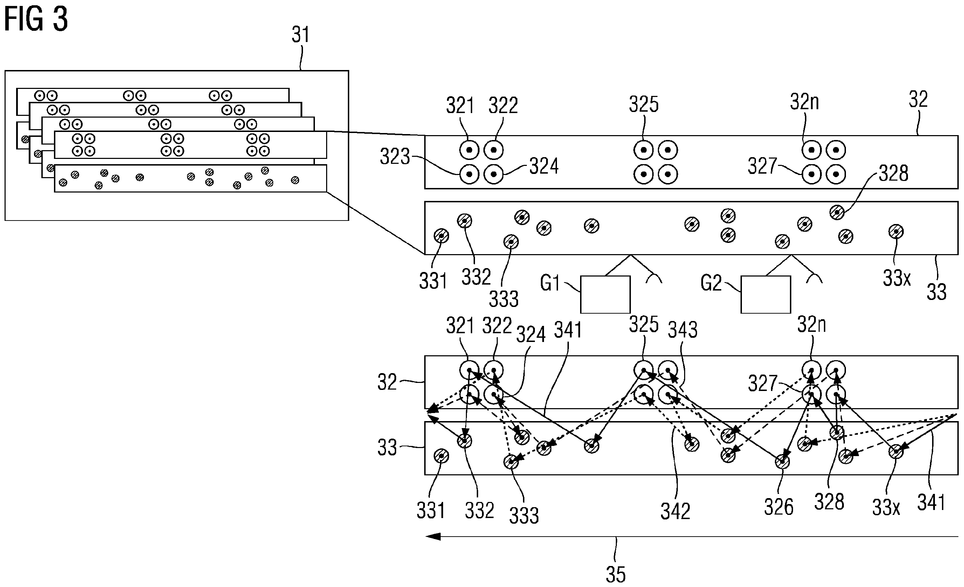

In dem vorher angeführten Beispiel der Bewegungssteuerung für ein Aufnahmegerät erhält der RL-Agent für das Training jeweils eine Beobachtung aus der Umgebung und führt eine Aktion durch, beispielsweise die Zuordnung eines neuen Gegenstands, welche sich auf einer Beförderungsvorrichtung befindet, zu einer Maschine, welche den Gegenstand aufnehmen soll. Diese Trainingsschleife kann beliebig oft durchlaufen werden. In Figur 3 werden die in dem Beispiel verwendeten Szenarien weiter unten detaillierter dargestellt.

Der Beobachtungsraum des RL-Agenten - also die Umgebungseigenschaften, die dem RL-Agenten zur Entscheidungsfindung zur Verfügung stehen - ist dabei so konzipiert, dass er alle relevanten Informationen enthält, die für eine optimale Entscheidungsfindung für die Auswahl des passenden Geräts erforderlich sind.

In dem genannten Beispiel umfasst das beispielsweise:
- Eine Liste der Koordinaten jedes Gegenstands auf der Transportvorrichtung (dem Förderband) oder den Transportvorrichtungen (Transport-Roboter, AGV...),
- Bereits bestehende Zuordnungen von weiteren aufzunehmenden Gegenständen zu jeweils einer der Aufnahmevorrichtungen,
- Eine Liste der Koordinaten der Ziel- /Platzierungspositionen, und/oder
- Eine Variable für jede Aufnahmevorrichtung, die den jeweiligen Verschleiß der Vorrichtung angibt.

In einer zweiten Phase P2 in Figur 2 wird die Produktiv- oder Online Phase des Verfahrens in Anwendung auf das genannte Beispiel beschrieben, also wenn das System in einer Anlage integriert zur Anwendung kommt. Eine Kamera mit Objekterkennung 1112 erkennt einen neuen Gegenstand inklusive der Ortsinformation zu diesem Gegenstand, und liefert diese Informationen 212 an die Steuerung 13. Die Steuerung 13 serialisiert ein Produktregister (d. h. es erfolgt eine Konvertierung der Daten in einen Bytestream, um das Objekt zu speichern oder in den Arbeitsspeicher, eine Datenbank oder eine Datei zu übertragen.

Hauptzweck ist, den Zustand des Objekts zu speichern, um es bei Bedarf neu erstellen zu können) und sendet es 223 (beispielsweise mittels Übertragungsprotokoll TCP) an einen Proxy-Server 14. Das Produktregister stellt einen Speicherbaustein dar, welcher den Zustand einer Kommissionierlinie beschreibt und insbesondere die Ortsangaben der erkannten Produkte auf der Transportvorrichtung, sowie ggf. weitere Informationen, wie die Orientierung, Größe, Gewicht, oder den gewünschte Ablageort enthält. In dem besprochenen Beispiel bildet ein Ausschnitt des Produktregisters den Beobachtungsraum des RL-Agenten.

Die Daten werden in dem dargestellten Beispiel in einer Edge Konfiguration über den Proxy 14 und die Rest API Schnittstelle verarbeitet:
Produkt Register (von der Steuerung) 223
Beobachtungsstatus 234
Abfrage an den Agenten (Forward request), 245
Antwort des Agenten (Forward response), 254
Zuordnung Objekt (product assignement), 243, 232 an die Steuerung, von der die Anfrage getriggert war.

In Figur 3 sind die vorbereiteten Trainingsdaten der Surrogatsimulation dargestellt, inklusive der daraus berechneten optimalen Fahrtwege für die Bewegungssteuerung. Verschiedene Varianzen 31 der Lage (Anordnung, Häufigkeit) von Objekten 331, 332, ... auf einer Transportvorrichtung 33 werden simuliert und als Basis für das Training eines RL Agenten verwendet. Dabei befindet sich beispielsweise auf einem Förderband 33 eine Anzahl an Objekten 331, 332, ... 33x, welche durch eine Aufnahmevorrichtung (in der Figur nicht dargestellt) aufgenommen und jeweils auf einem Zielplatz 321, 322, ... 32n beispielsweise auf einem weiteren Förderband abgelegt werden sollen. Dargestellt ist die jeweilige Bewegungsspur der Aufnahmevorrichtungen. In dem vorliegenden Beispiel sind das drei Aufnahmevorrichtungen mit den jeweiligen Bewegungsspuren 341, 342, 343. Eine Spur stellt die nacheinander folgende Aufnahme von Gegenständen von der Transportvorrichtung, also beispielsweise wird der Gegenstand 333 von der Aufnahmevorrichtung G1, G2 auf den Platz 322 bewegt, die Spur wechselt von Aufnahme zu Ablage und dann wieder zurück zu Aufnahme. Die Bewegungsrichtung des Förderbands ist in der Darstellung von rechts nach links, 35. Vorstellbar sind z. B Lebensmittel, wie Schokoladentafeln oder Pralinen, welche zur Verpackung in eine passende Schachtel abgelegt werden sollen.

Bei der Ablage sind ebenfalls einige Randbedingungen zu beachten, beispielsweise soll auf jedem Platz nur genau ein Objekt abgelegt werden. Es kann auch vorkommen, dass die Objekte nicht alle gleichartig sind, und dass von jeder Art nur eine vorgegebene Anzahl in ggf. auch vordefinierten AufnahmePlätzen abgelegt werden soll. Dabei ist auch zu beachten, dass die Aufnahmeplätze am Ende des Vorgangs alle belegt sein sollten.

Befindet sich nun eine sehr große Anzahl von (ggf. auch verschiedenartigen) Objekten auf dem Förderband, kann der entstehende Beobachtungsraum sehr groß werden, was die Lernkomplexität im Training negativ beeinflusst. In solchen Fällen ist es sinnvoll, für die Trainingsphase nur einen Teil aller Objekte, z. B. die neuesten n Objekte, auf dem Förderband zu beachten.

Ein geeigneter Wert für n kann über eine Hyperparameteroptimierung gefunden werden. Ein Hyperparameter ist ein Parameter, der zur Steuerung des Trainingsalgorithmus verwendet wird und dessen Wert im Gegensatz zu anderen Parametern vor dem eigentlichen Training des Modells festgelegt werden muss. Es gibt dabei verschiedene Vorgehensweisen, wie die Rastersuche, die Zufallssuche, die Bayessche Optimierung, Gradientenbasierte Optimierung oder die Evolutionäre Optimierung.

Ein RL-Agent lernt, das von der Umgebung gegebene Belohnungssignal zu maximieren, daher muss die Belohnungsfunktion mit dem Optimierungsziel übereinstimmen. In einer weiteren Ausgestaltung der Erfindung kann die Belohnung eine gewichtete Summe von Belohnungen für das Erreichen der verschiedenen Optimierungsziele sein.

Dies ermöglicht eine sehr feingranulare Verhaltensabstimmung durch den Benutzer. Um beispielsweise eine Richtlinie zu erlernen, in der alle Objekte erfolgreich kommissioniert, d. h. aufgenommen und an einem gewünschten Zielort abgelegt werden, und die Arbeitsbelastung jedes Kommissionierers dabei gleichmäßig gehalten wird, könnte eine geeignete Belohnungsfunktion sein:
- Der Agent erhält eine große negative Belohnung, sobald ein Objekt am Ende des Trägerbandes herunterfällt, weil es nicht ausgewählt bzw. aufgenommen wurde.
- Der Agent erhält eine negative Belohnung, die der Varianz der Arbeitsbelastung jedes Kommissionierers entspricht, d. h. abhängig davon, wie gleichmäßig die Arbeitslast auf die einzelnen Aufnahmevorrichtungen verteilt wird.

Während es im Allgemeinen bekannt ist, den Agenten gegen den digitalen Zwilling des Systems zu trainieren, ist der Ansatz in dem vorliegenden Verfahren, den Agenten in einer Surrogatsimulation, also in einer künstlich generierten Umgebung, zu trainieren, da der Trainingsprozess so erheblich beschleunigt werden kann. Dies ist vorteilhaft, da der Rechenaufwand in der digitalen Zwillingssimulation (Physik, 3D-Rendering etc.) erheblich ist, aber für das beschriebene Lernproblem völlig irrelevant. Daher kann dieser Rechenaufwand in einer Surrogatsimulation leicht weggelassen werden.

Darüber hinaus ermöglicht in einer vorteilhaften Ausgestaltung ein Konfigurator die automatische Erstellung einer solchen Surrogatsimulation. In diesem Konfigurator kann der Benutzer eine physische Beschreibung einer Kommissionierlinie (Anzahl der Kommissionierer, Position der Kommissionierer, Förderbandgeschwindigkeit usw.) importieren oder diese erforderlichen Informationen manuell eingeben. Optional enthält der Konfigurator Schieberegler, in denen der Anwender festlegen kann, wie wichtig verschiedene Optimierungskriterien sind. Je nach Konfiguration dieser Schieberegler kann automatisch eine passende Belohnungsfunktion deaktiviert werden.

Darüber hinaus ist es beispielsweise möglich, eine sogenannte Slider-Konfiguration in den Beobachtungsraum des RL-Agenten zu integrieren. Das Konfrontieren des Agenten anhand verschiedener Kombinationen von Optimierungskriterien während der Trainingsphase ermöglicht es dem Benutzer, das Verhalten des Agenten so, während des Einsatzes, mit sofortiger Wirkung anzupassen, ohne dass ein erneutes Training des Agenten erforderlich ist.

Das Training des RL-Agenten erzeugt ein Regelwerk in Form eines parametrisierten Modells, z. B. eines neuronalen Netzes. Der untere Teil P2 des Sequenzdiagramms in Figur 2 zeigt, wie dieses erlernte Regelwerk in ein tatsächliches System zur Online-Entscheidungsfindung integriert wird. Sobald ein neues Objekt von der Kamera 1121 erkannt wird, serialisiert die Steuerung 13 das Produktregister und sendet es, 223 (beispielsweise über TCP) an einen Proxy-Server 14. Das Produktregister enthält die Produktpositionen (vergleiche Figur 3, 321, 322, 32n auf dem Förderband 33) sowie die anderen Informationen, die den Status des Agenten ausmachen. Der Proxy-Server deserialisiert die empfangenen Daten und extrahiert die Informationen, die die neuronale Netzwerkrichtlinie als Eingabe erwartet. Die neuronale Netzwerkrichtlinie selbst ist als Microservice verpackt, der eine REST-API bietet. https://de.wikipedia.org/wiki/Microservices https://de.wikipedia.org/wiki/Representational State Transfer Der Proxy-Server fordert eine Zuweisung für das neue Produkt von der neuronalen Netzwerkrichtlinie an und gibt die Zuweisung an die SPS zurück.

Der oben erwähnte Proxy-Server 14 sowie der Agenten-Microservice, der eine Programmierungsschnittstelle bietet, beispielweise als REST-API 15 ausgestaltet, werden vorteilhafterweise auf einem externen Rechner, beispielsweise einem Industrie-PC oder einer Edge-Box ausgeführt. Denkbar ist aber auch, das Agentenverhalten direkt in die SPS 13 selbst zu integrieren. Dass der Agent als Microservice implementiert ist, bzw. auf einem IPC oder in der SPS laufen kann ist lediglich eine beispielhafte Implementierung.

Der beschriebene Ansatz ermöglicht es, die Auslastung von Aufnahmevorrichtungen unter Berücksichtigung verschiedener Optimierungsziele zu verbessern. Während sich Lösungen derzeit nur auf die Erreichung der Kernaufgabe einer Kommissionierlinie konzentrieren, erlaubt die vorgeschlagene Lösung die Berücksichtigung zusätzlicher Kriterien wie den gleichmäßigen Verschleiß aller Maschinen einer Linie / an einem Förderband. Dies hat beispielsweise den großen Vorteil, dass alle Maschinen ein einziges Wartungsintervall haben, das planbarer ist, Stillstandszeiten reduziert und Kosten senkt.

### Bezugszeichenliste:

- 11: Kamera
- 12: Objekterkennung
- 1112: Kamera / Objekterkennung
- 13: Steuerung, PLC, SPS
- 14: Proxy Server
- 15: Programmierschnittstelle, Rest API
- 16: Reinforcement Learning Agent
- 17: Simulation
- 146: Bereitstellung auf Edge Geräten
- 167: Training (High Performance Computer)

- 212: Objekt Lokalisierung
- 223: Objekt (Produkt?) Registrierung
- 232, 243: Objekt (Produkt?) Zuordnung
- 234: Beobachtungsstatus
- 245: Weiterleiten Anfrage (forward request)
- 254: Weiterleiten Antwort (forward response)

- 31: Aufsicht schematisch, Trainingsdaten
- 32, 33: Förderband
- 331, 33x: Objekt
- 321, 32n: Platz zur Aufnahme von Objekten
- 341, 342: Fahrstrecke von Maschine zur Aufnahme und Ablage

- G1, G2: Gerät (Roboter, Maschine)
- P1: Trainingsphase
- P2: Produktivphase

## Patentansprüche

1. Verfahren zur Optimierung einer Bewegungssteuerung eines Gerätes (G1), unter Verwendung von verstärkendem Lernen, wobei das verstärkende Lernen eine Trainingsphase (P1) umfasst, welche unter Verwendung von generierten Trainingsdaten (17) erfolgt,
wobei die Trainingsphase (P1) des verstärkenden Lernens ein erstes Optimierungsziel mit einer ersten Rewardfunktion umfasst und
wobei die Trainingsphase (P1) des verstärkenden Lernens mindestens ein zweites, vom ersten Optimierungsziel verschiedenes Optimierungsziel mit einer zweiten Rewardfunktion umfasst und
wobei die Trainingsphase (P1) einem Trainingsanteil auf dem ersten Optimierungsziel und einen Trainingsanteil auf das zumindest zweite Optimierungsziel richtet, mittels einer gewichteten Summe der Rewardfunktionen der jeweiligen Optimierungsziele.

2. Verfahren gemäß Patentanspruch 1,
**dadurch gekennzeichnet, dass**
die generierten Trainingsdaten eine vereinfachte Darstellung der Steuerung des Gerätes darstellen und damit eine gegenüber Echtzeit beschleunigte Trainigsphase ermöglichen.

3. Verfahren gemäß Patentanspruch 1 oder 2,
**dadurch gekennzeichnet, dass**
das Gerät (G1) ein Aufnahmegerät ist, welches dazu geeignet ist, eine Pick & Place Aktion eines Objektes (331, 332, ...) durchzuführen.

4. Verfahren gemäß Patentanspruch 3,
**dadurch gekennzeichnet, dass**
das Objekt (331, 332, ...) durch das Gerät (G1) von einer Transportvorrichtung (33) aufgenommen und auf einer Aufnahmevorrichtung (32) abgelegt wird.

5. Verfahren gemäß einem der vorherigen Patentansprüche,
**dadurch gekennzeichnet, dass**
die Bewegungssteuerung für das Gerät (G1) folgende Verfahrens-Schritte umfasst:
- Auswahl des Objekts (331, 332, ...) auf der Transportvorrichtung (33),
- Auswahl des Geräts aus einer Menge von Geräten (G1, G2),
- Aufnahme des ausgewählten Objekts (331, 332, ...) durch das ausgewählte Gerät (G1, G2),
- Auswahl eines Ablageplatzes (321, 322) für das Objekt, und
- Ablage des Objekts (331, 332, ...) durch das Gerät an dem ausgewählten Ablageort (321, 322, ...) .

6. Verfahren gemäß einem der vorherigen Patentansprüche,
**dadurch gekennzeichnet, dass**
das Optimierungsziel zumindest einen der folgenden Aspekte betrifft:
- Transportzeit des Objekts (331, 332, ...) bis zur Ablage,
- Fahrweg des Geräts (341, 342,..),
- Aufnahmequote der zu transportierenden Objekte,
- Verschleiß des Geräts (G1, G2),
- Korrekte Zuordnung des Objekts (331, 332, ...) zum Ablageort (321, 322, ...),
- Energieverbrauch des Geräts (G1, G2),
- Durchsatz.

7. Verfahren gemäß einem der vorherigen Patentansprüche,
**dadurch gekennzeichnet, dass**
im Training der Bewegungssteuerung das Optimierungsziel des ersten Gerätes (G1) in Abhängigkeit von dem Optimierungsziel zweiten Geräts (G2) erfolgt.

8. Verfahren gemäß einem der vorherigen Patentansprüche,
**dadurch gekennzeichnet, dass**
die Generierung der Trainingsdaten konfigurierbar ist und automatisiert erfolgt.

9. Verfahren gemäß einem der vorherigen Patentansprüche,
**dadurch gekennzeichnet, dass**
zur Vereinfachung der Simulation während der Trainingsphase nur eine Anzahl n Testfälle oder Objekte (331, 332, ...), insbesondere die letzten n Objekte, berücksichtigt werden.

10. Verfahren gemäß Patentanspruch 8,
**dadurch gekennzeichnet, dass**
die Anzahl n mittels Hyperparameteroptimierung ermittelt wird.

11. Computerprogrammprodukt zur Optimierung einer Bewegungssteuerung unter Verwendung von verstärkendem Lernen zur Durchführung des Verfahrens gemäß einem der Patentansprüche 1 bis 10.

12. Vorrichtung zur Optimierung einer Bewegungssteuerung eines Gerätes (G1) unter Verwendung von verstärkendem Lernen (146)
umfassend einen Agenten (16) geeignet für die Durchführung eines Trainings mittels verstärkendem Lernen, wobei eine Trainingsphase (P1) unter Verwendung von generierten Trainingsdaten (17) erfolgt,
wobei die Trainingsphase (P1) des verstärkenden Lernens ein erstes Optimierungsziel mit einer ersten Rewardfunktion umfasst und
wobei die Trainingsphase (P1) des verstärkenden Lernens mindestens ein zweites, vom ersten Optimierungsziel verschiedenes Optimierungsziel mit einer zweiten Rewardfunktion umfasst und
wobei die Trainingsphase (P1) einem Trainingsanteil auf dem ersten Optimierungsziel und einen Trainingsanteil auf das zumindest zweite Optimierungsziel richtet, mittels einer gewichteten Summe der Reward Funktionen der jeweiligen Optimierungsziele und
eine Schnittstelle (14, 15) zur Ausgabe der von Steuersignalen an das Gerät (G1).

13. Vorrichtung gemäß Patentanspruch 12,
**dadurch gekennzeichnet, dass**
die generierten Trainingsdaten eine vereinfachte Darstellung der Steuerung des Gerätes simulieren und damit eine gegenüber Echtzeit beschleunigte Trainigsphase ermöglichen.

14. Vorrichtung gemäß Patentanspruch 12 oder 13,
**dadurch gekennzeichnet, dass**
das Gerät (G1) ein Aufnahmegerät ist, welches dazu geeignet ist, eine Pick & Place Aktion eines Objektes (331, 332, ...) durchzuführen.

15. Vorrichtung gemäß Patentanspruch 14,
**dadurch gekennzeichnet, dass**
das Objekt (331, 332, ...) durch das Gerät (G1) von einer Transportvorrichtung (33) aufgenommen, und auf einer Aufnahmevorrichtung (32) abgelegt wird, wobei die Bewegungssteuerung für das Gerät (G1) dazu ausgelegt ist, folgende Verfahrens-Schritte durchzuführen:
- Auswahl des Objekts (331, 332, ...) auf der Transportvorrichtung (33),
- Auswahl des Geräts aus einer Menge von Geräten (G1, G2),
- Aufnahme des ausgewählten Objekts (331, 332, ...) durch das ausgewählte Gerät (G1, G2),
- Auswahl eines Ablageplatzes (321, 322) für das Objekt, und
- Ablage des Objekts (331, 332, ...) durch das Gerät an dem ausgewählten Ablageort (321, 322, ...) .

16. Vorrichtung gemäß einem der vorherigen Patentansprüche 12 bis 15,
**dadurch gekennzeichnet, dass**
das Optimierungsziel zumindest einen der folgenden Aspekte betrifft:
- Transportzeit des Objekts (331, 332, ...) bis zur Ablage,
- Fahrweg des Geräts (341, 342,..),
- Aufnahmequote der zu transportierenden Objekte,
- Verschleiß des Geräts (G1, G2),
- Korrekte Zuordnung des Objekts (331, 332, ...) zum Ablageort (321, 322, ...),
- Energieverbrauch des Geräts (G1, G2),
- Durchsatz.

17. Vorrichtung gemäß einem der vorherigen Patentansprüche 12 bis 16,
**dadurch gekennzeichnet, dass**
der Agent (16) zur Optimierung der Bewegungssteuerung auf das Optimierungsziel des ersten Gerätes (G1) in Abhängigkeit von dem Optimierungsziel zweiten Geräts (G2) trainiert ist.

18. Vorrichtung gemäß einem der vorherigen Patentansprüche 12 bis 17,
**dadurch gekennzeichnet, dass**
die Generierung der Trainingsdaten konfigurierbar, automatisiert erfolgt.

19. Vorrichtung gemäß einem der vorherigen Patentansprüche 12 bis 18,
**dadurch gekennzeichnet, dass**
während der Trainingsphase nur eine Anzahl n Testfälle oder Objekte (331, 332, ...), insbesondere die letzten n Objekte, berücksichtigt werden.

20. Vorrichtung gemäß einem der vorherigen Patentansprüche 12 bis 19,
**dadurch gekennzeichnet, dass**
die Anzahl n mittels Hyperparameteroptimierung gefunden wird.

21. Vorrichtung gemäß einem der vorherigen Patentansprüche 12 bis 20,
**dadurch gekennzeichnet, dass**
die Realisierung auf einem Edge Gerät (146), mittels Proxy Server (14) und Rest API (15) erfolgt.
